Europäisches Patentamt

European Patent Office

Office européen des brevets

(19)

(11) Veröffentlichungsnummer: **0 416 139 A1**

# (12) EUROPÄISCHE PATENTANMELDUNG

(21) Anmeldenummer: 89116279.4

(22) Anmeldetag: 04.09.89

(51) Int. Cl.⁵: **B65G 47/91**, B65G 49/02

(43) Veröffentlichungstag der Anmeldung:
13.03.91 Patentblatt 91/11

(84) Benannte Vertragsstaaten:
**BE CH DE ES FR GB IT LI LU NL SE**

(71) Anmelder: **SCHERING AKTIENGESELLSCHAFT**
**Berlin und Bergkamen**
**Müllerstrasse 170/178 Postfach 65 03 11**
**W-1000 Berlin 65(DE)**

(72) Erfinder: **Haase, Peter**
**Lohweg 50**
**W-8501 Feucht(DE)**
Erfinder: **Kosikowski, Thomas**
**Ginsterweg 68**
**W-8501 Burgthann 2(DE)**

(54) Lineareinheit mit zwei unabhängig voneinander fahrenden Greifern.

(57) Die Erfindung betrifft eine Lineareinheit zur Beschickung von Traggestellen (6) mit plattenförmigen Gegenständen (7), insbesondere in Galvanisieranlagen, dadurch gekennzeichnet, daß die Lineareinheit mit zwei oder mehr, voneinander unabhängig bewegbaren Manipulatoren (2, 3) ausgerüstet ist, sowie ein Verfahren unter Verwendung dieser Lineareinheit.

EP 0 416 139 A1

## LINEAREINHEIT MIT MEHREREN VONEINANDER UNABHÄNGIG BEWEGLICHEN MANIPULATOREN

Die Erfindung betrifft eine Lineareinheit sowie ein Verfahren zur Beschickung von Traggestellen mit plattenförmigen Gegenständen, insbesondere in Galvanisieranlagen.

Die Beschickung von Traggestellen mit plattenförmigen Gegenständen mittels einer Lineareinheit ist bereits in der deutschen Patentanmeldung 3703542 vorgesehen worden.

Die Lineareinheit hat dabei die Aufgabe, die zu handhabenden Teile möglichst schnell vom Aufnahmeort zur Befestigungsstelle an den Traggestellen und nach der Behandlung umgekehrt von der Befestigungsstelle an den Traggestellen zur Ablagestelle zu transportieren. Dazu ist an der Lineareinheit ein Manipulator in Form eines Greifers angebracht, der die plattenförmigen Gegenstände aufnimmt, während des Transportes festhält und an der entsprechenden Stelle wieder frei gibt.

Das Beladen der an einem Warenträger hängenden Traggestelle geschieht dabei in der Weise, daß eine Platte nach der anderen aufgenommen, zur Befestigungsstelle transportiert und dort an das Traggestell übergeben wird.

Die Wege, die dabei vom Greifer zurückgelegt werden müssen, können dabei bis zu einigen Metern betragen. Das Entladen erfolgt sinngemäß in umgekehrter Reihenfolge.

Es sind somit bei jedem Beschicken und Entleeren eines Warenträgers mehrere, bei größeren Anlagen und/oder kleinen Plattenabmessungen eine Vielzahl von glatten zu bewegen.

Die Anlagen, in denen die beschriebenen Anordnungen Verwendung finden, arbeiten taktend, d. h. im Abstand einer "Taktzeit" kommt ein Warenträger mit fertig behandelten Teilen an der Be- und Entladestation an, muß entladen und mit unbehandelten Teilen wieder beladen werden. Übliche Taktzeiten der Anlage liegen dabei zwischen 3 und 10 Minuten.

Um in der zur Verfügung stehenden Zeit alle erforderlichen Bewegungen ausführen zu können, ist es erforderlich, alle Abläufe so schnell wie möglich durchzuführen. Dem sind aber durch die verwendeten Bauelemente und wegen der erforderlichen Positioniergenauigkeit beim Anfahren der Haltestellen Grenzen gesetzt.

Bei größeren Anlagen oder bei der Bestückung eines Warenträgers mit einer Vielzahl von Platten reicht deshalb die zur Verfügung stehende Taktzeit oft nicht aus. Es ist dann erforderlich, je eine Station für den Be- und Entladevorgang einzurichten, an denen gleichzeitig je ein Warenträger beschickt bzw. entleert wird. Dabei geht allerdings für den Umsetzvorgang des Warenträgers von einer Station zur anderen wieder Zeit verloren. Es ist deshalb auch üblich, zwei oder auch mehr Stationen einzurichten, an denen sowohl entleert wie auch beschickt wird. Nachteilig ist dabei der größere Platzbedarf für die Mehrzahl der Stationen und auch die aufzuwendenden Kosten werden größer.

Aufgabe der Erfindung ist es, die beschriebenen Nachteile zu vermeiden, indem der Be- und Entladevorgang mit einem wesentlich geringeren Zeitaufwand durchgeführt werden kann.

Dies wird erfindungsgemäß dadurch gelöst, daß die Lineareinheit mit zwei oder mehr voneinander unabhängig bewegbaren Manipulatoren ausgerüstet ist.

Die Manipulatoren oder Greifer können dabei die gleichen oder verschiedenen Führungen benutzen.

Die Linearbewegung der Manipulatoren wird durch jeweils einen eigenen Antrieb erzeugt, wobei für die Kraftübertragung zum Manipulator alle dafür gebräuchlichen Maschinenelemente, wie Gewindespindeln, Zahnriemen, Ketten etc. verwendet werden können.

Die für die Kraftübertragung vom Antrieb zu einem Manipulator verwendeten Maschinenelemente können durch die anderen Manipulatoren hindurch oder an ihnen vorbei geführt werden.

Der Antrieb der Manipulatoren erfolgt durch getrennte Vorrichtungen in Form von Spindeln, Zahnriemen, Ketten oder Zahnstangen. Der Antrieb des einen Manipulators kann dabei jeweils durch den anderen hindurch oder aber an ihm vorbeigehen.

Die Parkpositionen der Manipulatoren können an entgegengesetzten oder gleichen Enden der Lineareinheit angeordnet sein.

Einzelheiten der Erfindung werden nachstehend anhand von Figuren beschrieben.

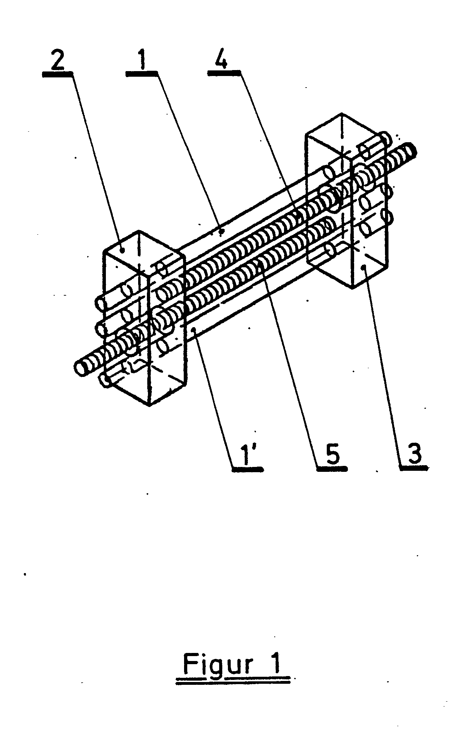

Figur 1 zeigt schematisch das Grundprinzip der Erfindung. Auf gemeinsamen Führungen 1 und 1` sind zwei Manipulatoren 2 und 3 gelagert. Die beiden Manipulatoren 2 und 3 sind unabhängig voneinander bewegbar. Ihre Verschiebung auf den Fuhrungen 1 und 1` kann beispielsweise über Gewindespindeln 4 und 5 erfolgen. Die Gewindespindel 4 soll dabei im dargestellten Beispiel mit Manipulator 2 im Eingriff stehen und durch Manipulator 3 berührungslos hindurchgehen. Sie kann aber auch in letzterem längsverschiebbar gelagert sein, wobei sie dadurch abgestützt wird.

Umgekehrt steht die Gewindespindel 5 mit Manipulator 3 im Eingriff.

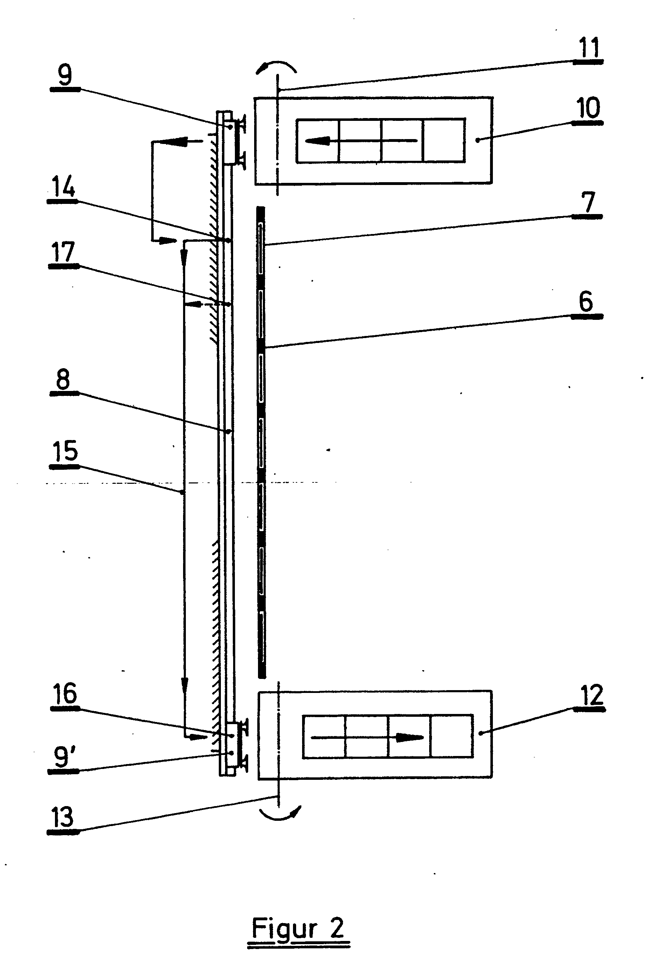

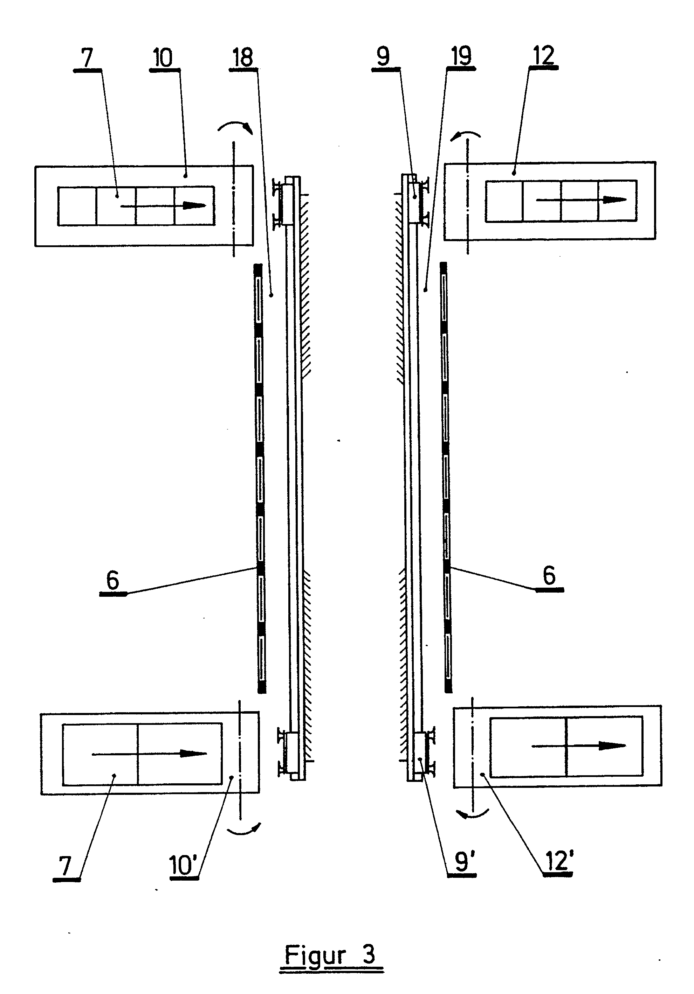

Eine Anwendung der Erfindung für die Be- und Entladung von Warenträgern mit Leiterplatten in einer Galvanisieranlage ist in Figur 2 dargestellt. Die Zeichnung gibt die Draufsicht auf die Station wieder, in der sowohl das Be- wie das Entladen ausgeführt wird.

In der Station ist ein - nicht dargestellter - Warenträger abgelegt, an dem Traggestelle 6 hängen, an denen Leiterplatten 7 befestigt werden können. Das Be- und Entladen wird mit einer automatisch gesteuerten Einrichtung durchgeführt, die aus folgenden Komponenten besteht: der Lineareinheit 8 mit zwei Manipulatoren 9 bzw. 9`, einer Zuführeinrichtung 10 für die Leiterplatten 7 mit einer Vorrichtung 11, welche die Leiterplatten 7 aus der horizontalen in die vertikale Lage bringt, ferner der Entnahmeeinrichtung 12 zum Abtransport der Leiterplatten 7 mit einer Vorrichtung 13, die die Leiterplatten aus der vertikalen in die horizontale Lage verschwenkt.

Der Ablauf des Be- und Entladevorganges erfolgt in folgender Weise:

Nachdem von der Transporteinrichtung der Galvanisieranlage ein Warenträger mit fertig behandelten Leiterplatten in der Station abgelegt worden ist, fährt der Manipulator 9`, der beispielsweise als Greifer entsprechend der deutschen Pa-(entanmeldung 3606493 ausgebildet ist, zum ersten Haltepunkt 14 gegenüber der ersten Leiterplatte 7, entnimmt diese von den Traggestellen 6 und bringt sie, wie mit Linienzug 15 dargestellt ist zum Haltepunkt 16, wo sie an die Vorrichtung 13 übergeben wird. Sind an den Traggestellen 6 mehrere Leiterplatten übereinander angeordnet, muß der Manipulator 9 entsprechend mehrmals zum Haltepunkt 14 fahren. Sind am Haltepunkt 14 alle Leiterplatten 7 abgenommen, fährt der Manipulator 9` als nächstes den Haltepunkt 17 an und beginnt hier mit dem Entnehmen der Leiterplatten 7.

Zu gleicher Zeit kann aber schon der Manipulator 9, nachdem er von der Vorrichtung 11 eine unbehandelte Leiterplatte 7 übernommen hat, zum Haltepunkt 14 fahren und hier die Neu- Beladung der Traggestelle 6 beginnen. Auf diese Weise kann fast das gesamte Be- und Entladen des Warenträgers parallel und somit in kurzer Zeit erfolgen.

Ein weiterer Vorteil der Erfindung wird nachstehend anhand Figur 3 beschrieben. Bei dieser Variante ist die Forderung gegeben, in der zugehörigen Galvanisieranlage Leiterplatten mit unterschiedlichen Abmessungen behandeln zu können. Dazu ist je eine eigene Station für das Beladen 18 und für das Entladen 19 vorgesehen. An der Beladestation 18 ist an einer Seite eine Zuführstation 10 für Leiterplatten 7 kleinerer Abmessung und auf der anderen Seite eine Zuführstation 10` für Leiterplatten 7 größerer Abmessung angeordnet. Dementsprechend besitzt die Entladestation 19 eine Entnahmevorrichtung 12 für kleinere und auf der anderen Seite eine Vorrichtung 12` für größere Leiterplatten. Ansonsten entsprechen die Komponenten denen wie in Figur 2 beschrieben.

In der Galvanisieranlage befinden sich Warenträger im Umlauf, an denen die Gestelle 6 entsprechend den Leiterplattenabmessungen in unterschiedlichen Abständen angeordnet sind. Die Warenträger besitzen Kennungen für die jeweilige Gestellbestückung, die von den an der Be- und Entladestation 18 bzw. 19 angebrachten Sensoren abgenommen und an die jeweilige Steuerung gegeben wird.

Wird nun beispielsweise ein Warenträger mit fertig behandelten Leiterplatten 7 kleinerer Abmessung an der Entladestation 19 abgelegt, werden die Leiterplatten 7 von dem Manipulator 9 abgenommen und zur Entnahmevorrichtung 12 transportiert.

Kommt ein Warenträger mit Leiterplatten 7 größerer Abmessung zur Entladestation 19, tritt der Manipulator 9` in Funktion.

An der Beladestation 18 laufen die Vorgänge entsprechend ab. So ist es auf einfache Weise möglich, eine Galvanisieranlage mit unterschiedlich großen Leiterplatten automatisch zu beschicken und zu entleeren. Dabei ist die Anzahl der Größenvarianten nicht auf zwei beschränkt, es können auch mehr sein. Für jede Leiterplattengröße muß nur eine eigene Zufuhr- und Entnahmeeinrichtung vorhanden sein und ein eigener Manipulator. Je nach Anwendungsfall kann aber ein -Manipulator u. U. auch mehrere Plattengrößen transportieren. Die jeweils nicht benötigten Manipulatoren können auf der dem benötigten Manipulator gegenüberliegenden Seite der Be- bzw. Entladestation in Parkstellung gebracht werden.

Je nach den Erfordernissen der Galvanisieranlage kann für das Einfahren zu behandelnder Platten in die Anlage entweder die Leiterplattentype oder die zur Verfügung stehende Warenträgertype Priorität haben. Im ersten Fall muß für die gewunschte Leiterplattentype ein passend mit Gestellen bestückter Warenträger an der Beladestation zur Verfügung gestellt werden, der z. B. aus einem Speicher entnommen werden kann.

Im anderen Fall müssen für alle Warenträgertypen, die an der Beladestation ankommen, ausreichend Leiterplatten zur Verfügung stehen.

## Ansprüche

1. Lineareinheit zur Beschickung von Traggestellen mit plattenförmigen Gegenständen, insbesondere in Galvanisieranlagen, dadurch gekennzeichnet, daß die Lineareinheit mit zwei oder mehr, voneinander unabhängig bewegbaren, Manipulatoren ausgerüstet ist.

2. Lineareinheit nach Anspruch 1 , dadurch gekennzeichnet, daß für alle Manipulatoren eine gemeinsame Führung verwendet wird.

3. Lineareinheit nach Anspruch 1 , dadurch gekennzeichnet, daß für die verschiedenen Manipulatoren jweils eine getrennte Führung verwendet wird.

4. Lineareinheit nach Anspruch 1 , dadurch gekennzeichnet, daß für jeden Manipulator ein eigener Antrieb für die Erzeugung der Linearbewegung vorhanden ist, wobei für die Kraftübertragung vom Antrieb zu den Manipulatoren alle dafür gebräuchlichen Maschinenelemente, wie Gewindespindeln, Zahnriemen, Ketten, etc. verwendet werden können.

5. Lineareinheit nach Anspruch 4, dadurch gekennzeichnet, daß die für die Kraftübertragung vom Antrieb zu einem Manipulator verwendeten Maschinenelemente durch den oder die anderen Manipulatoren hindurch geführt werden.

6. Lineareinheit nach Anspruch 4, dadurch gekennzeichnet, daß die für die Kraftübertragung von Antrieb zu einem Manipulator verwendeten Maschinenelemente an den anderen Manipulatoren vorbeigeführt werden.

7. Lineareinheit nach Anspruch 4, dadurch gekennzeichnet, daß der Antrieb der Manipulatoren auf diesen selbst angeordnet ist und die Kraftübertragung über ein Zahnrad auf eine feststehende Zahnstange erfolgt.

8. Verfahren zur Beschickung von Traggestellen mit plattenförmigen Gegenständen, insbesondere in Galvanisieranlagen, dadurch gekennzeichnet, daß Lineareinheiten nach den Ansprüchen 1 bis 7 verwendet werden.

**Figur 1**

## Figur 2

**Figur 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 637 114 (RUPERT APP GmbH & CO.) <br> * Ganzes Dokument * <br> --- | 1,3,4,7,8 | B 65 G 47/91 <br> B 65 G 49/02 |
| X | US-A-4 415 305 (TSUBUKU) <br> * Spalte 1, Zeilen 8-24; Figur 1 * <br> --- | 1,2,4,7,8 | |
| A | EP-A-0 049 223 (NORDA S.p.A.) <br> * Anspruch 3; Figur 6 * <br> --- | 1,8 | |
| A,D | DE-A-3 703 542 (SCHERING AG) <br> --- | 1,8 | |
| A,D | DE-A-3 606 493 (SCHERING AG) <br> ----- | 1,8 | |

**RECHERCHIERTE SACHGEBIETE (Int. Cl.5)**

B 65 G
B 23 Q

Der vorliegende Recherchenbericht wurde für alle Patentansprüche erstellt

| Recherchenort | Abschlußdatum der Recherche | Prüfer |
|---|---|---|
| DEN HAAG | 08-05-1990 | BEERNAERT J.E. |

EPO FORM 1503 03.82 (P0403)